# EUROPÄISCHE PATENTSCHRIFT

(11) **EP 3 678 812 B1**
(45) Veröffentlichungstag und Bekanntmachung des Hinweises auf die Patenterteilung: **29.09.2021**
(21) Anmeldenummer: 18755424.1
(22) Anmeldetag: 09.08.2018
(51) Int. Cl.: B23K 101/18, B23K 101/34, B23K 103/04, B23K 103/20, B23K 26/14, B23K 26/144, B23K 26/12, B23K 26/24, B23K 26/70, B23K 35/365, B23K 35/02, B23K 35/30, B23K 35/38, B23K 35/40

(54) **VERFAHREN UND VORRICHTUNG ZUM LASERSCHWEISSEN EINES ODER MEHRERER STAHLBLECHE AUS PRESSHÄRTBAREM STAHL**
METHOD AND DEVICE FOR LASER WELDING ONE OR MORE STAINLESS STEEL SHEETS MADE OF PRESS HARDENABLE STEEL
PROCEDE ET DISPOSITIF DE SOUDURE AU LASER D'UNE OU DE PLUSIEURS TÔLES D'ACIER EN ACIER TREMPABLE SOUS PRESSE

(30) Priorität: 07.09.2017 DE 102017120611
(43) Veröffentlichungstag der Anmeldung: 15.07.2020
(73) Patentinhaber: BAOSTEEL TAILORED BLANKS GMBH, 47259 Duisburg (DE)
(72) Erfinder: VON DER HEYDT, Jana, 47051 Duisburg (DE); BOTH, Christian, 47059 Duisburg (DE); KESSLER, Michael, 50126 Bergheim (DE)
(74) Vertreter: Cohausz & Florack
(86) Internationale Anmeldenummer: PCT/EP2018/071571
(87) Internationale Veröffentlichungsnummer: WO 2019/048172

(56) Entgegenhaltungen:
- EP-A1- 2 832 887
- DE-A1-102010 019 258
- US-A1- 2014 042 131
- US-A1- 2015 030 382

## Beschreibung

Die Erfindung betrifft ein Verfahren zum Schmelzschweißen eines oder mehrerer Stahlbleche aus presshärtbarem Stahl, vorzugsweise Mangan-Bor-Stahl, bei dem das Schmelzschweißen unter Zuführung von Zusatzdraht in das ausschließlich mittels eines Laserstrahls erzeugte Schmelzbad erfolgt (siehe, z.B. EP 2 832 887 A1, welche die Basis für den Oberbegriff des Anspruchs 1 offenbart).

Des Weiteren betrifft die Erfindung eine Vorrichtung zum Schmelzschweißen eines oder mehrerer Stahlbleche, insbesondere zur Durchführung eines Verfahrens der voranstehend genannten Art, mit einem Laserschweißkopf und einer Drahtzuführungseinrichtung zum Zuführen von Zusatzdraht in das ausschließlich mittels eines Laserstrahls erzeugte Schmelzbad (siehe, z.B. EP 2 832 887 A1, welche die Basis für den Oberbegriff des Anspruchs 13 offenbart).

In der Automobilherstellung gewinnen sogenannte warmumformbare, d.h. presshärtbare Bleche aus Mangan-Bor-Stahl, zum Beispiel der Stahlsorte 22MnB5, immer mehr an Bedeutung. Im Anlieferungszustand, d.h. vor dem Presshärten, weisen Mangan-Bor-Stähle eine Zugfestigkeit von ca. 600 MPa und ein ferritisch-perlitisches Gefüge auf. Durch das Presshärten und die damit verbundene rasche Abkühlung nach dem Umformen kann ein vollständig martensitisches Gefüge eingestellt werden, welches Zugfestigkeiten im Bereich von 1500 bis 2000 MPa aufweisen kann. Häufig werden derartige Bauteile aus sogenannten Tailor welded Blanks gefertigt; das heißt es erfolgt eine Verbindung zwischen verschiedenen anforderungsgerechten Blechdicken und/oder Werkstoffgüten, üblicherweise mittels Laserstrahlschweißen.

In dem Warmumformungs- und Härtungsprozess, in welchem die Tailor welded Blanks weiterverarbeitet werden, soll deren Schweißnaht in der Regel in demselben Maße gehärtet werden wie die Grundwerkstoffe der Stahlplatinen, aus denen die Tailor welded Blanks zusammengesetzt sind. Dies zu gewährleisten, kann zum Beispiel beim Verschweißen von Stahlplatinen unterschiedlicher Dicke, bei denen sich am Fügestoß ein relativ großer Dickensprung ergibt, große Herausforderungen an den Warmumformungsprozess stellen. Das Prozessfenster (Parameterfenster) für einen adäquaten Härtungsprozess ist dann relativ klein. Zudem ist der Härtungsprozess empfindlich und muss sehr genau eingestellt werden, was oftmals produktionstechnische Einschränkungen für den Anwender mit sich bringt.

Weiter eingeschränkt wird das Schmelzschweißen von warmumformbaren, presshärtbaren Stahlblechen durch die oft vorgesehene Oberflächenbeschichtung aus Aluminium. Eine solche Beschichtung, z.B. eine Aluminium-Silizium-Beschichtung, wird üblicherweise vorgesehen, um eine Verzunderung der Werkstücke bei der Warmumformung zu vermeiden. Auf die Qualität von Schweißnähten wirkt sich diese Oberflächenbeschichtung jedoch sehr negativ aus. Denn durch das Schmelzschweißen der beschichteten Stahlbleche wird neben dem Grundwerkstoff auch die aluminiumhaltige Oberflächenbeschichtung aufgeschmolzen und dadurch Aluminium in die Schweißnaht eingebracht. Liegt der Aluminiumgehalt in der Schweißnaht zwischen 2 und 10 Gew.-%, kommt es zur Bildung von ferritischen Bereichen (Phasen), die zu einer Herabsetzung der Festigkeit der Schweißnaht führen. Die Festigkeit der Schweißnaht liegt in solchen Fällen unter der des Grundwerkstoffs, so dass mit einem Versagen des betreffenden Bauteils in der Schweißnaht zu rechnen ist, unabhängig von der gefügten Blechdickenkombination.

Um die Ferritbildung zu verhindern, wird nach dem Stand der Technik eine zumindest teilweise Entfernung der Oberflächenbeschichtung im Randbereich der aneinander zu schweißenden Blechkanten vor dem Schweißprozess mittels mechanischer Werkzeuge oder Laserstrahlabtragung durchgeführt (vgl. EP 2 007 545 B1). Für dieses zumindest teilweise Entfernen der Oberflächenbeschichtung ist jedoch ein zusätzlicher Prozessschritt erforderlich, der sowohl kosten- als auch zeitintensiv ist und somit die Wirtschaftlichkeit der Fertigung von Bauteilen der hier beschriebenen Art beeinträchtigen.

In der US 2008/0011720 A1 ist ein Laser-Lichtbogen-Hybridschweißverfahren beschrieben, bei dem Platinen aus Mangan-Bor-Stahl, die eine Aluminium enthaltende Oberflächenschicht aufweisen, im Stumpfstoß miteinander verbunden werden. Der Laserstrahl ist dabei mit mindestens einem elektrischen Lichtbogen kombiniert, um das Metall am Stumpfstoß aufzuschmelzen und die Platinen miteinander zu verschweißen. Der elektrische Lichtbogen wird mittels einer Wolfram-Schweißelektrode gebildet oder bildet sich bei Verwendung eines MIG-Schweißbrenners an der Spitze eines Zusatzdrahtes. Der Zusatzdraht kann Elemente (z.B. Mn, Ni und Cu) enthalten, welche die Umwandlung des Stahls in ein austenitisches Gefüge induzieren und eine Aufrechterhaltung der austenitischen Umwandlung im Schmelzbad begünstigen. Mit diesem Hybridschweißverfahren soll erreicht werden, dass warmumformbare Platinen aus Mangan-Bor-Stahl, die mit einer Beschichtung auf Aluminium-Silizium-Basis versehen sind, ohne vorherige Entfernung des Beschichtungsmaterials im Bereich der herzustellenden Schweißnaht verschweißt werden können, wobei aber dennoch sichergestellt sein soll, dass an den Stoßkanten der Platinen befindliches Aluminium nicht zu einer Herabsetzung der Zugfestigkeit des Bauteils in der Schweißnaht führt. Durch das Vorsehen eines elektrischen Lichtbogens hinter dem Laserstrahl sollen das Schmelzbad homogenisiert und dadurch örtliche Aluminiumkonzentrationen größer 1,2 Gew.-%, die ein ferritisches Gefüge erzeugen, eliminiert werden.

Dieses bekannte Hybridschweißverfahren ist hinsichtlich des Energieverbrauchs aufgrund der Erzeugung des elektrischen Lichtbogens relativ aufwendig. Ferner ist die Schweißgeschwindigkeit vergleichsweise niedrig. Zudem weist eine durch Laser-Lichtbogen-Hybridschweißen erzeugte Schweißnaht eine für die weitere Umformung ungünstige Nahtform auf, welche gegebenenfalls einer Nachbearbeitung bedarf.

Aus der EP 2 919 942 B1 ist ein Verfahren zum Laserstrahlschweißen von Blechen aus presshärtbarem Mangan-Bor-Stahl im Stumpfstoß unter Verwendung von Zusatzdraht bekannt, wobei der Zusatzdraht mindestens ein Legierungselement aus der Mangan, Chrom, Molybdän, Silizium und/oder Nickel umfassenden Gruppe enthält, das die Bildung von Austenit in dem mit dem Laserstrahl erzeugten Schmelzbad begünstigt, und wobei dieses mindestens eine Legierungselement mit einem um mindestens 0,1 Gew.-% größeren Massenanteil im Zusatzdraht vorhanden ist als in dem presshärtbaren Stahl der Stahlbleche. Der Zusatzdraht weist dabei folgende Zusammensetzung auf: 0,05 - 0,15 Gew.-% C, 0,5 - 2,0 Gew.-% Si, 1,0 - 2,5 Gew.-% Mn, 0,5 - 2,0 Gew.-% Cr + Mo, und 1,0 - 4,0 Gew.-% Ni, Rest Eisen und unvermeidbare Verunreinigungen, wobei der Zusatzdraht einen um mindestens 0,1 Gew.-% geringeren Kohlenstoff-Massenanteil als der presshärtbare Stahl der Stahlbleche aufweist. Das Verfahren ist außerdem dadurch gekennzeichnet, dass die verwendeten Stahlbleche unbeschichtet sind oder durch Abtragen ihrer Beschichtung im Randbereich entlang den miteinander zu verschweißenden Stoßkanten vor dem Schweißen teilentschichtet wurden.

In der EP 2 737 971 A1 wird ein Laserstrahlschweißverfahren zur Herstellung von Tailor welded Blanks aus beschichteten Stahlblechen unter Verwendung von Zusatzdraht beschrieben, wobei die verwendeten Stahlbleche aus borlegiertem Stahl bestehen und eine Aluminium-Silizium- oder Zink-Beschichtung aufweisen. Der Zusatzdraht enthält Kohlenstoff oder Mangan, wobei der Massenanteil dieses Elements im Zusatzdraht größer ist als im Grundmaterial der beschichteten Stahlbleche. So soll der Kohlenstoffgehalt des Zusatzdrahtes 0,1 Gew.-% bis 0,8 Gew.-% und sein Mangangehalt 1,5 Gew.-% bis 7,0 Gew.-% höher liegen als derjenige des Grundmaterials der Stahlbleche. Hierdurch soll eine Verringerung der Festigkeit der Schweißnaht gegenüber den pressgehärteten Stahlblechen infolge des Eindringens von Beschichtungsmaterial in das durch den Laserstrahl erzeugte Schmelzbad vermieden werden.

Die EP 2 736 672 B1 offenbart ein Verfahren zur Herstellung eines Bauteils aus beschichteten Stahlblechen durch Laserstrahlschweißen unter Verwendung von Zusatzdraht, wobei die Stahlbleche eine Beschichtung auf Basis von Aluminium aufweisen, die in Randbereichen entlang der miteinander zu verschweißenden Stoßkanten vor dem Schweißen soweit abgetragen wurde, dass dort noch eine intermetallische Legierungsschicht verbleibt. Der Zusatzdraht weist in diesem bekannten Verfahren folgende Zusammensetzung auf: 0,6 - 1,5 Gew.-% C, 1,0 - 4,0 Gew.-% Mn, 0,1 - 0,6 Gew.-% Si, max. 2,0 Gew.-% Cr, und max. 0,2 Gew.-% Ti, Rest Eisen und durch die Bearbeitung verursachte Verunreinigungen.

Die DE 10 2010 019 258 A1 beschreibt ein Verfahren zur Herstellung von Stahlblechprodukten, bei dem Platinen aus Mangan-Bor-Stahl unterschiedlicher Dicke entlang eines Fügestoßes mittels eines Laserstrahls verschweißt werden, wobei vor dem Schweißprozess auf mindestens eine Fügestoßkante der miteinander zu verschweißenden Stahlplatinen eine viskose Flüssigkeit aufgetragen wird, die mindestens eine die Festigkeit der zu erzeugenden Schweißnaht erhöhende Komponente enthält. Als viskose Flüssigkeit wird dabei zum Beispiel Mineralöl oder eine Flüssigkeit, in der Graphitteilchen dispergiert sind, verwendet.

Die US 2014/0042131 A1 beschreibt ein System und ein Verfahren zum Erwärmen eines Zusatzdrahtes beim Laserschweißen eines oder mehrerer Stahlbleche. Der Zusatzdraht weist dabei eine erste Oberfläche auf, welche Energie eines Laserstrahls absorbiert, und eine zweite Oberfläche, die von der ersten Oberfläche durch eine Dicke t im Bereich von 0,010 bis 0,045 inch getrennt ist. Eine Querschnittsform des Zusatzdrahtes umfasst dabei mindestens einen in Richtung des Laserstrahls gebogenen Abschnitt, der sich entlang der Querschnittsform des Zusatzdrahtes erstreckt. Ferner weist die Querschnittsform eine projizierte Breite w im Bereich von 0,030 bis 0,095 inch auf.

Der vorliegenden Erfindung liegt die Aufgabe zugrunde, ein Verfahren bzw. eine Vorrichtung der eingangs genannten Art anzugeben, mit dem/der Stahlbleche, von denen mindestens ein Blech aus presshärtbarem Stahl hergestellt ist und eine Aluminiumbeschichtung aufweist, derart gefügt werden können, dass Härteeinbrüche in der Schweißnaht nach dem Warmumformen (Presshärten)abgefangen werden können, wobei sich das Verfahren bzw. die Vorrichtung durch eine hohe Produktivität sowie einen vergleichsweise geringen Energieverbrauch auszeichnen sollen. Insbesondere soll ein Verfahren der eingangs genannten Art angegeben werden, durch das die Härtbarkeit der Schweißnaht verbessert wird, und dies unabhängig davon, ob es sich bei den miteinander zu verschweißenden Stahlblechen um Stahlbleche gleicher oder verschiedener Werkstoffgüte handelt. Des Weiteren soll der anlagentechnische Aufwand zur Umsetzung des Verfahrens relativ gering sein. Es soll also ein Verfahren bzw. eine Vorrichtung der eingangs genannten Art geschaffen werden, mit dem bzw. der beschichtete Bleche aus presshärtbarem Stahl, insbesondere solche mit einer Beschichtung auf Basis von Aluminium, auf wirtschaftliche Weise miteinander verschweißt werden können und die Härtbarkeit der Schweißnaht verbessert wird, so dass das Prozessfenster für einen adäquaten Härtungsprozess vergrößert wird und produktionstechnische Einschränkungen für den Anwender verringert werden.

Zur Lösung dieser Aufgabe werden ein Verfahren mit den in Anspruch 1 angegebenen Merkmalen sowie eine Vorrichtung mit den in Anspruch 13 angegebenen Merkmalen vorgeschlagen. Bevorzugte und vorteilhafte Ausgestaltungen des erfindungsgemäßen Verfahrens bzw. der Vorrichtung sind in den Unteransprüchen angegeben.

Die Erfindung sieht bei einem Laserstrahlschweißverfahren der eingangs genannten Art vor, dass der Zusatzdraht vor dem Schmelzschweißen mit Graphitpartikeln beschichtet wird und der so beschichtete Zusatzdraht direkt in das Schmelzbad derart eingeführt wird, dass die Spitze des Zusatzdrahtes im Schmelzbad schmilzt, wobei die Graphitpartikel zum Aufbringen auf den Zusatzdraht mit einem wachsförmigen oder flüssigen Trägermittel gemischt werden und das Gemisch als Beschichtung auf den Zusatzdraht aufgebracht wird.

Durch den zusätzlichen Kohlenstoff aus der Graphit enthaltenden Beschichtung des Zusatzdrahtes wird die Härtbarkeit der Schweißnaht erheblich verbessert, unabhängig davon, ob es sich bei den miteinander zu verschweißenden Stahlblechen um Bleche gleicher oder verschiedener Werkstoffgüte handelt. Das erfindungsgemäße Verfahren bietet insbesondere die Perspektive, beim Laserstrahlschweißen von presshärtbaren Stahlblechen, z.B. artgleichen Mangan-Bor-Stahlblechen unterschiedlicher Blechdicke, die eine Beschichtung auf Basis von Aluminium aufweisen, einen Teil des Entschichtungsvorgang oder auch den ganzen Vorgang im Randbereich der aneinander zu schweißenden Blechkanten wegfallen zu lassen. Durch den Wegfall des Entschichtungsvorgangs lässt sich die Produktivität eines derartigen Laserstrahlschweißverfahrens deutlich steigern. Im Vergleich zu einem Laser-Lichtbogen-Hybridschweißverfahren ermöglicht das erfindungsgemäße Laserstrahlschweißverfahren relativ hohe Schweißgeschwindigkeiten.

Außerdem bietet das erfindungsgemäße Laserstrahlschweißverfahren im Vergleich zum Laser-Lichtbogen-Hybridschweißen den Vorteil, dass die erzeugte Laserschweißnaht relativ schmal ist und sich durch eine bessere Nahtgeometrie.

Ein Vorteil des erfindungsgemäßen Verfahrens gegenüber der Verwendung eines kohlenstoffhaltigen Zusatzdrahtes, wie etwa bei dem aus der EP 2 737 971 A1 bekannten Verfahren, besteht darin, dass grundsätzlich jeder handelsübliche Zusatzdraht verwendet und mit Graphitpartikeln beschichtet werden kann. Der zur Durchführung des erfindungsgemäßen Verfahrens verwendete Zusatzdraht sollte allerdings aluminiumfrei sein oder ist, von unvermeidbaren Verunreinigungen abgesehen, vorzugsweise aluminiumfrei. Es ist also für die Durchführung des erfindungsgemäßen Verfahrens nicht notwendig, einen speziellen Zusatzdraht anfertigen zu lassen bzw. zu beschaffen. Somit ist auch die Belieferung durch mehrere Zusatzdraht-Lieferanten möglich. Die in das Schmelzbad einbringbare Kohlenstoffmenge ist dabei im Wesentlichen nur durch die Aufnahmefähigkeit des Trägermittels bzw. die Dispergierbarkeit der Graphitpartikel in dem als Beschichtungsmaterial dienenden Trägermittel und durch die Aufnahmefähigkeit des Schmelzbades begrenzt.

Ein Vorteil des erfindungsgemäßen Verfahrens gegenüber dem aus der DE 10 2010 019 258 A1 bekannten Auftragen einer viskosen Flüssigkeit auf eine Fügestoßkante der miteinander zu verschweißenden Stahlplatinen, wobei die viskose Flüssigkeit mindestens eine die Festigkeit der zu erzeugenden Schweißnaht erhöhende Komponente, z.B. Graphitteilchen enthält, besteht darin, dass die Einbringung des Kohlenstoffs in das Schmelzbad und damit in die Schweißnaht mittels einer entsprechenden Beschichtung des Zusatzdrahtes erheblich gleichmäßiger und effektiver ist als mittels des Bestreichens der Fügestoßkanten. Zudem erscheint die anlagentechnische Umsetzung des erfindungsgemäßen Verfahrens weniger aufwendig als beim Bestreichen der Fügestoßkanten mit einer viskosen Flüssigkeit der genannten Art.

Das erfindungsgemäße Verfahren kann nicht nur beim Fügen mehrerer Stahlplatinen gleicher oder unterschiedlicher Blechdicke zum Einsatz kommen, von denen mindestens eine Platine aus presshärtbarem Stahl, vorzugsweise Mangan-Bor-Stahl hergestellt ist, sondern insbesondere auch beim Laserstrahlschweißen eines einzelnen platten- oder bandförmigen Stahlblechs aus presshärtbarem Stahl, wobei im letztgenannten Fall die miteinander zu verschweißenden Blechkanten durch Umformen, beispielsweise durch Abkanten oder Rollformen, aufeinander zu bewegt werden, so dass sie schließlich einander zugewandt im Stumpfstoß angeordnet sind. Des Weiteren liegt eine Anwendung des erfindungsgemäßen Verfahrens auch beim Laserstrahlschweißen eines oder mehrerer Stahlbleche aus presshärtbarem Stahl, vorzugsweise Mangan-Bor-Stahl, im Überlappstoß im Rahmen der Erfindung.

Eine bevorzugte Ausgestaltung der Erfindung sieht vor, dass das Beschichten des Zusatzdrahtes mit Graphitpartikeln am Ort des Schmelzschweißens, vorzugsweise kontinuierlich während des Vorgangs des Schmelzschweißens durchgeführt wird. Hierdurch können die Produktionskosten gesenkt werden. Durch ein am Ort des Schmelzschweißens erfolgendes Beschichten des Zusatzdrahtes, wobei das Beschichten bevorzugt kontinuierlich während des Schmelzschweißens durchgeführt wird, kann die Erfindung anlagentechnisch in kompakter Bauweise verwirklicht werden. Die auf den Zusatzdraht aufgebrachte Beschichtungsmenge lässt sich dabei in Abhängigkeit der Drahtzufuhrgeschwindigkeit und/oder der Schweißgeschwindigkeit innerhalb eines bestimmtes Mengenbereichs passend einstellen. Insbesondere beinhaltet diese Ausgestaltung die Option, die Beschichtungsmenge bzw. den Graphitpartikelgehalt des Beschichtungsmaterials in Abhängigkeit der Zusammensetzung der miteinander zu verschweißenden Stahlbleche, insbesondere in Abhängigkeit der Art und/oder Dicke der Oberflächenbeschichtung der Stahlbleche, passend einzustellen, so dass die Schweißnaht nach dem Warmumformen (Presshärten) eine dem Grundwerkstoff der Stahlbleche vergleichbare oder vorzugsweise sogar eine höhere Härte sowie Festigkeit aufweist.

Nach einer weiteren Ausgestaltung der Erfindung wird das Beschichten des Zusatzdrahtes mit Graphitpartikeln zwischen einer Drahtvorschubvorrichtung und einer den Zusatzdraht dem Schmelzbad zuführenden Führungsleitung durchgeführt. Auf diese Weise können ein schmelzbadnahes Beschichten des Zusatzdrahtes mit Graphitpartikeln und das Zuführen des beschichteten Zusatzdrahtes in das Schmelzbad sehr zuverlässig durchgeführt werden.

Das erfindungsgemäße Beschichten des Zusatzdrahtes lässt sich auf verschiedene Weise verwirklichen. Vorzugsweise wird das Beschichten des Zusatzdrahtes mit Graphitpartikeln mittels einer Beschichtungsvorrichtung in Form eines Tauchbades, einer Rollenauftragsvorrichtung oder einer Aufsprühvorrichtung durchgeführt. Die Rollenauftragsvorrichtung kann dabei mit einer oder mehreren Auftragsrollen versehen sein, die vorzugsweise jeweils mit einer Ringnut versehen sind, deren Querschnittsprofil um ein bestimmtes Maß größer ist als die Dicke bzw. der Durchmesser des zu beschichtenden Zusatzdrahtes, wobei der Zusatzdraht so geführt wird, dass er zumindest teilweise in die Ringnut eingreift. Durch eine Steuerung der Drehgeschwindigkeit der mindestens einen Auftragsrolle in Relation zu der Vorschubgeschwindigkeit des Zusatzdrahtes kann bzw. wird die Menge des aufzutragenden Beschichtungsmaterials eingestellt.

Um den Zusatzdraht mit Graphitpartikeln zu beschichten, werden diese mit einem wachsförmigen oder flüssigen Trägermittel gemischt. Die mittlere Partikelgröße D50 der Graphitpartikel beträgt dabei beispielsweise maximal 300 µm, vorzugsweise maximal 200 µm, besonders bevorzugt maximal 100 µm. D50 bedeutet, dass 50% der Partikel kleiner sind als der angegebene Wert.

Eine vorteilhafte Ausgestaltung der Erfindung sieht vor, dass als flüssiges Trägermittel Öl, vorzugsweise Paraffinöl, beispielsweise Weißöl verwendet wird. In einem solchen Trägermittel lassen sich Graphitpartikel sehr stabil dispergieren. Das Gemisch kann zudem Stabilisatoren und/oder Additive, beispielsweise Benetzmittel oder andere Dispergierhilfsmittel enthalten. Außerdem weist Öl, insbesondere Mineralöl oder Paraffinöl selbst einen hohen Kohlenstoffanteil auf, der zu einer verbesserten Härtbarkeit der Schweißnaht beiträgt.

Der Feststoffgehalt des aus Graphitpartikeln und dem Trägermittel zusammengesetzten Gemisches zum Beschichten des Zusatzdrahtes kann beispielsweise im Bereich von 20 bis 80 Gew.-%, vorzugsweise im Bereich von 40 bis 80 Gew.-% liegen.

Nach einer weiteren Ausgestaltung des erfindungsgemäßen Verfahrens weisen das oder die Stahlbleche eine Oberflächenschicht auf Aluminium- oder Aluminium-Silizium-Basis auf, die sich bis zu mindestens einer zu verschweißenden Längskanten des Stahlblechs oder der Stahlbleche erstreckt. Diese Ausgestaltung bietet Kostenvorteile, da bei ihr der zusätzliche Prozessschritt des Abtragens der Aluminiumbeschichtung im Bereich der zu verschweißenden Blechkanten, bei ausreichender Kohlenstoff-Einbringung, entfallen kann. Zudem ergibt diese Ausgestaltung im Vergleich zum herkömmlichen Laserstrahlschweißen von aluminiumbeschichten Mangan-Bor-Stahlblechen nach vorheriger Entschichtung der Ränder der im Stumpfstoß zu fügenden Blechkanten eine optimale Schweißnahtgeometrie in Form eines größeren tragenden Querschnitts. Dies verbessert insbesondere die dynamische Belastbarkeit der Schweißnaht bzw. verringert die Materialermüdung im Bereich der Schweißnaht.

Stahlblech oder Stahlbleche aus presshärtbarem Stahlblech, insbesondere Mangan-Bor-Stahl, das bzw. die unter Anwendung des erfindungsgemäßen Verfahren gefügt werden, weisen beispielsweise eine Dicke von mindestens 1,8 mm oder mindestens 2,0 mm auf. Die Stahlbleche können dabei eine unterschiedliche Blechdicke und/oder eine unterschiedliche Werkstoffgüte, insbesondere Zugfestigkeit aufweisen.

Das erfindungsgemäße Verfahren ist insbesondere für ein Verschweißen von Stahlblech oder Stahlblechen aus presshärtbarem Stahl, z.B. Mangan-Bor-Stahl, vorgesehen, das bzw. die im Stumpfstoß verschweißt werden, wobei sich an dem Stumpfstoß ein Dickensprung von mindestens 0,4 mm ergibt. Der Dickensprung kann sich dabei durch Verwendung von Stahlblechen unterschiedlicher Blechdicke oder bei Verwendung eines einzelnen Stahlblechs oder von Stahlblechen gleicher Blechdicke durch einen Versatz der aneinander zu fügenden Blechkanten ergeben.

Eine weitere Ausgestaltung der Erfindung sieht vor, dass der Anteil an Graphitpartikeln in dem Gemisch aus Trägermittel und Graphitpartikeln so eingestellt wird, dass der Zusatzdraht, nachdem das Gemisch als Beschichtung auf ihn aufgebracht wurde, einen Kohlenstoff-Massenanteil von mindestens 0,2 Gew.-%, vorzugsweise von mindestens 0,3 Gew.-% aufweist. Auf diese Weise lässt sich bereits in vielen Fällen erreichen, dass die Schweißnaht nach dem Presshärten des Stahlblechwerkstücks eine dem Grundwerkstoff der Stahlbleche vergleichbare Härte sowie Festigkeit aufweist.

Nach einer weiteren bevorzugten Ausgestaltung der Erfindung wird der Anteil an Graphitpartikeln in dem Gemisch aus Trägermittel und Graphitpartikeln so eingestellt, dass der Zusatzdraht, nachdem das Gemisch als Beschichtung auf ihn aufgebracht wurde, einen Kohlenstoff-Massenanteil aufweist, der um 0,1 Gew.-% bis 1,2 Gew.% höher liegt als der Kohlenstoff-Massenanteil des Grundwerkstoffs des oder der Stahlbleche.

Optional kann der noch nicht beschichtete Zusatzdraht vor dem erfindungsgemäßen Beschichten mindestens ein Legierungselement enthalten, welches die Bildung von Austenit in dem mit dem Laserstrahl erzeugten Schmelzbad begünstigt. Hierdurch lässt sich die Härtbarkeit der Schweißnaht weiter verbessern, unabhängig davon, ob es sich bei den miteinander zu verschweißenden Stahlblechen um Stahlbleche gleicher oder verschiedener Werkstoffgüte handelt.

Um eine Versprödung der Schweißnaht zu verhindern, sieht eine weitere Ausgestaltung der Erfindung vor, dass das Schmelzbad während des Laserstrahlschweißens mit Schutzgas (Inertgas) beaufschlagt wird. Bei dem Schutzgas handelt es sich vorzugsweise um reines Argon, Helium, Stickstoff oder deren Mischung oder ein Gemisch aus Argon, Helium, Stickstoff und/oder Kohlendioxid und/oder Sauerstoff.

Eine weitere Ausgestaltung der Erfindung sieht vor, dass das oder die Stahlbleche beim Laserstrahlschweißen im Stumpfstoß oder Überlappstoß mit einem Spalt von weniger als 0,8 mm, vorzugsweise weniger als 0,6 mm, besonders bevorzugt weniger als 0,4 mm gefügt wird bzw. werden. Eine geringe Spaltweite in der Größenordnung von wenigen Zehntelmillimetern begünstigt eine hohe Schweißgeschwindigkeit und damit eine hohe Produktivität des Schweißverfahrens. Zudem begünstigt eine geringe Spaltweite in der angegebenen Größenordnung die Optimierung der Nahtgeometrie.

In einer bevorzugten Ausgestaltung der Erfindung werden das bzw. die zu verschweißenden Stahlbleche dahingehend ausgewählt, dass ihr Grundwerkstoff folgende Zusammensetzung aufweist: 0,10 bis 0,50 Gew.-% C, max. 0,40 Gew.-% Si, 0,50 bis 2,00 Gew.-% Mn, max. 0,025 Gew.-% P, max. 0,010 Gew.-% S, max. 0,60 Gew.-% Cr, max. 0,50 Gew.-% Mo, max. 0,050 Gew.-% Ti, 0,0008 bis 0,0070 Gew.-% B, und min. 0,010 Gew.-% Al, Rest Fe und unvermeidbare Verunreinigungen. Die aus einem solchen Stahl hergestellten Bauteile (Werkstücke) weisen nach einem Presshärten eine relativ hohe Zugfestigkeit auf.

Weiter bevorzugt werden in dem erfindungsgemäßen Verfahren Mangan-Bor-Stahlbleche verwendet, die nach dem Presshärten eine Zugfestigkeit im Bereich von 1500 bis 2000 MPa aufweisen.

Der in dem erfindungsgemäßen Verfahren verwendete Zusatzdraht weist vorzugsweise folgende Zusammensetzung auf: 0,1 - 0,4 Gew.-% C, 0,5 - 2,0 Gew.-% Si, 1,0 - 2,5 Gew.-% Mn, 0,5 - 5,0 Gew.-% Cr + Mo, und 1,0 - 4,0 Gew.-% Ni, Rest Eisen und unvermeidbare Verunreinigungen. Versuche haben ergeben, dass sich mit einem solchen Zusatzdraht bei Anwendung des erfindungsgemäßen Verfahrens eine verstärkte Umwandlung der Schweißnaht in ein martensitisches Gefüge beim Presshärten der gefügten Stahlbleche umsetzen lässt.

Die der vorliegenden Erfindung zugrunde liegende, oben angegebene Aufgabe wird ferner durch eine Vorrichtung zum Schmelzschweißen eines oder mehrerer Stahlbleche gelöst, wobei die Vorrichtung einen Laserschweißkopf, eine Drahtzuführungseinrichtung zum Zuführen von Zusatzdraht in das ausschließlich mittels eines Laserstrahls erzeugte Schmelzbad und eine in Form eines Tauchbades ausgeführte Beschichtungsvorrichtung, mittels welcher der Zusatzdraht mit einem Graphitpartikel enthaltenden wachsförmigen oder flüssigen Gemisch beschichtet wird, aufweist.

Die als Bestandteil der erfindungsgemäßen Vorrichtung ausgebildete Beschichtungsvorrichtung ist nach einer bevorzugten Ausgestaltung der Erfindung zwischen einer Drahtvorschubvorrichtung und einer den Zusatzdraht dem Schmelzbad zuführenden Führungsleitung angeordnet. Hierdurch lassen sich die bereits oben in Bezug auf das erfindungsgemäße Verfahren angegebenen Vorteile erzielen.

Nachfolgend wird die Erfindung anhand einer mehrere Ausführungsbeispiele darstellenden Zeichnung näher erläutert. Es zeigen schematisch:

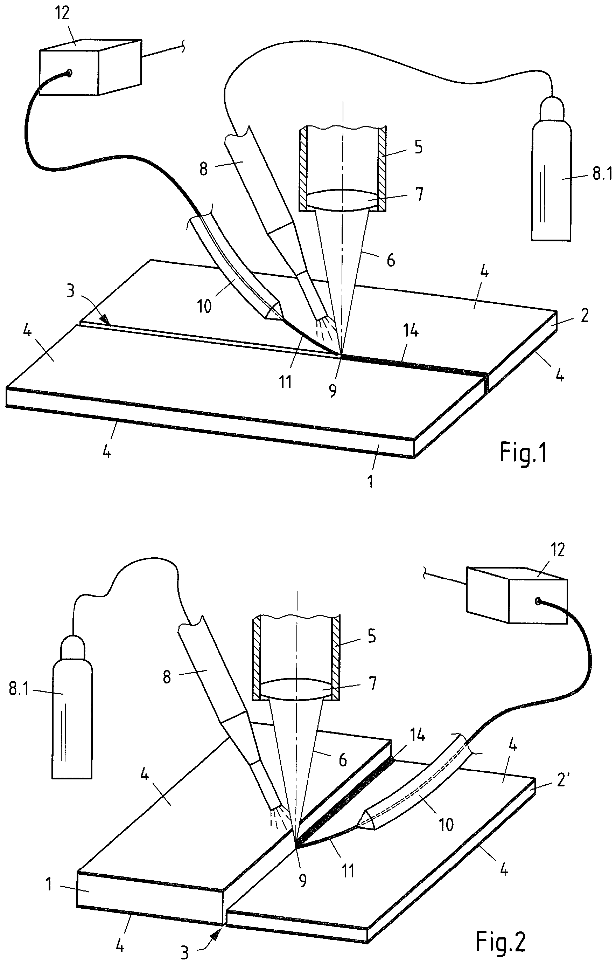

- Fig. 1: eine perspektivische Ansicht von Teilen einer Vorrichtung zur Durchführung des erfindungsgemäßen Schmelzschweißverfahrens, wobei mittels eines Laserstrahls zwei im Wesentlichen gleich dicke, presshärtbare Stahlbleche im Stumpfstoß unter Verwendung von Zusatzdraht miteinander verschweißt werden;
- Fig. 2: eine perspektivische Ansicht von Teilen einer Vorrichtung zur Durchführung des erfindungsgemäßen Schmelzschweißverfahrens, wobei hier mittels eines Laserstrahls zwei unterschiedlich dicke, presshärtbare Stahlbleche im Stumpfstoß unter Verwendung von Zusatzdraht miteinander verschweißt werden;

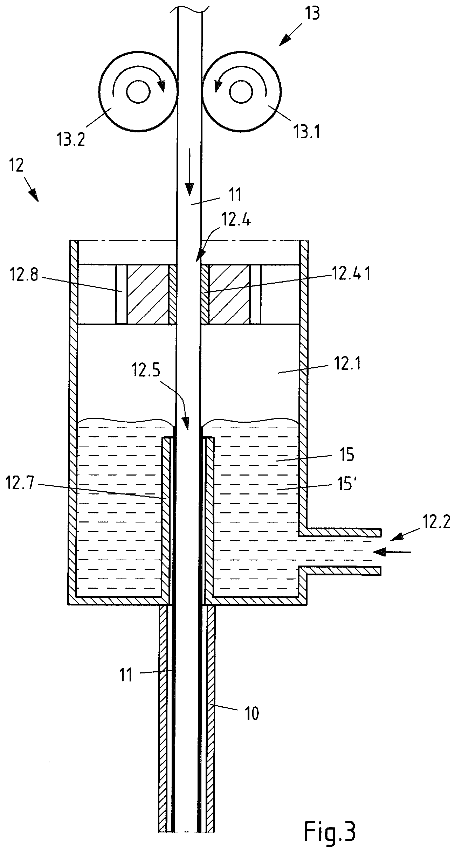

- Fig. 3: eine Längsschnittansicht einer Beschichtungsvorrichtung zum Beschichten eines Zusatzdrahtes für eine Laserstrahlschweißvorrichtung gemäß Fig. 1 oder Fig. 2;

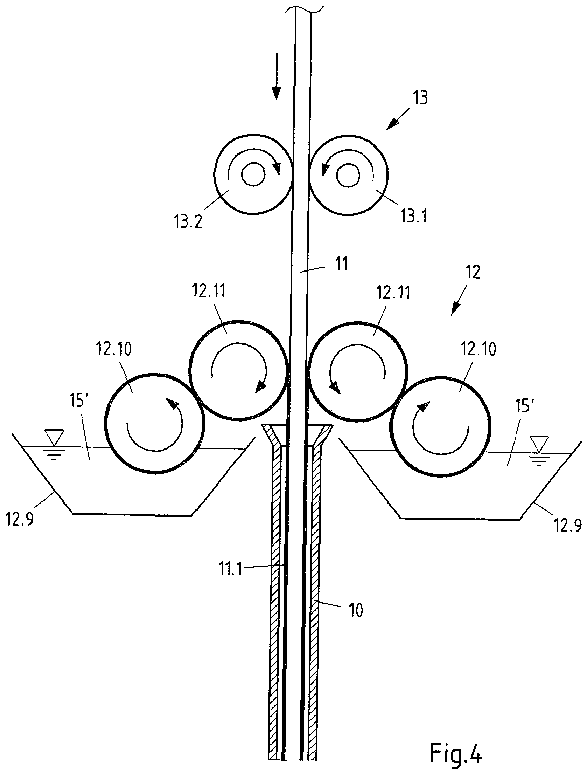

- Fig. 4: ein weiteres nicht erfindungsgemäßes Beispiel einer Beschichtungsvorrichtung zum Beschichten eines Zusatzdrahtes für eine Laserstrahlschweißvorrichtung gemäß Fig. 1 oder Fig. 2, in einer Vorder- oder Seitenansicht, wobei eine Drahtführungsleitung im Längsschnitt dargestellt ist; und

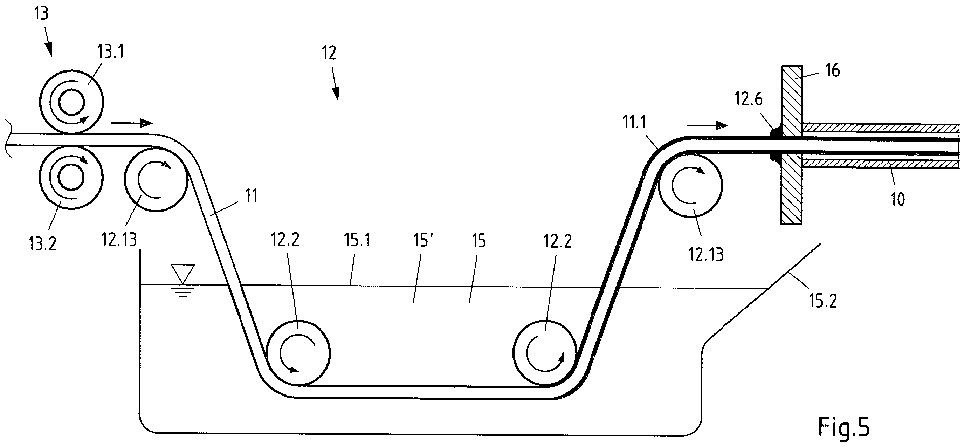

- Fig. 5: noch ein weiteres Ausführungsbeispiel einer Beschichtungsvorrichtung zum Beschichten eines Zusatzdrahtes für eine Laserstrahlschweißvorrichtung gemäß Fig. 1 oder Fig. 2, in einer Vorder- oder Seitenansicht, wobei die Komponenten der Vorrichtung teilweise in einem Vertikalschnitt dargestellt sind.

In den Figuren 1 und 2 ist eine Laserstrahlschweißvorrichtung skizziert, mittels der das erfindungsgemäße Verfahren durchgeführt werden kann. Die Vorrichtung umfasst eine Unterlage (nicht gezeigt), auf der zwei Bänder oder Platinen 1, 2 aus Stahl gleicher oder unterschiedlicher Werkstoffgüte derart angeordnet sind, dass ihre miteinander zu verschweißenden Kanten als Stumpfstoß aneinander liegen.

Zumindest eines der Stahlbleche 1, 2 ist aus presshärtbarem Stahl, vorzugsweise Mangan-Bor-Stahl hergestellt. Die Stahlbleche 1, 2 werden mit einem Spalt 3 von wenigen Zehntelmillimetern im Stumpfstoß gefügt. Der Spalt 3 beträgt beispielsweise weniger als 0,6 mm, vorzugsweise weniger als 0,4 mm. Sofern die Stahlbleche 1, 2 aus Stahl unterschiedlicher Werkstoffgüte hergestellt sind, so besitzt das eine Stahlblech 1 oder 2 beispielsweise eine relativ weiche Tiefziehgüte, während das andere Stahlblech 2 bzw. 1 aus höherfestem Stahl besteht.

Der presshärtbare Stahl, aus dem zumindest eines der miteinander zu verbindenden Stahlbleche 1, 2 besteht, kann beispielsweise folgende chemische Zusammensetzung aufweisen:
max. 0,45 Gew.-% C,
max. 0,40 Gew.-% Si,
max. 2,0 Gew.-% Mn,
max. 0,025 Gew.-% P,
max. 0,010 Gew.-% S,
max. 0,8 Gew.-% Cr + Mo,
max. 0,05 Gew.-% Ti,
max. 0,0050 Gew.-% B, und
min. 0,010 Gew.-% Al,
Rest Fe und unvermeidbare Verunreinigungen.

Im Anlieferungszustand, d.h. vor einer Wärmebehandlung und schnellen Abkühlung, besitzen die presshärtbaren Stahlplatinen 1, 2 eine Streckgrenze Re von vorzugsweise mindestens 300 MPa; ihre Zugfestigkeit Rm beträgt z.B. mindestens 480 MPa, und ihre Bruchdehnung A₈₀ liegt vorzugsweise bei mindestens 10%. Nach dem Warmumformen (Presshärten), d.h. einem Erhitzen auf Austenitisierungstemperatur von ca. 900 bis 950°C, Umformen bei dieser Temperatur und anschließendem schnellen Abkühlen, weisen die Stahlplatinen 1, 2 eine Streckgrenze Re von ca. 1.100 MPa, eine Zugfestigkeit Rm von ca. 1.500 bis 2000 MPa und eine Bruchdehnung Aso von ca. 5,0% auf.

Die Stahlbleche 1, 2 sind vorzugsweise mit einer metallischen Beschichtung 4 aus Aluminium oder Zink versehen. Es handelt sich beispielsweise um eine Al-Si-Beschichtung. Die metallische Oberflächenbeschichtung 4 ist auf den Grundwerkstoff vorzugsweise beidseitig aufgebracht, beispielsweiseweise durch Schmelztauchbeschichten, indem ein Band aus presshärtbarem Stahl, vorzugsweise Mangan-Bor-Stahl durch ein Zink- oder Al-Si-Schmelzbad geleitet, überschüssiges Beschichtungsmaterial von dem Band abgeblasen und das beschichtete Band anschließend nachbehandelt, insbesondere erhitzt wird. Der Aluminiumgehalt der Oberflächenbeschichtung 4 kann im Bereich von 70 bis 90 Gew.-% liegen.

Alternativ kann auch nur eines der zu verschweißenden Stahlbleche 1, 2 eine aluminium- oder zinkhaltige Oberflächenbeschichtung 4 aufweisen. Ferner kann die Oberflächenbeschichtung 4 gegebenenfalls nur auf einer Seite des oder der Stahlbleche 1, 2 appliziert sein, z.B. mittels physikalischer Gasphasenabscheidung (PVD) oder mittels eines elektrolytischen Beschichtungsprozesses.

Die Stahlbleche 1, 2 können, wie in Fig. 1 gezeigt, im Wesentlichen gleich dick sein. Die Blechdicke liegt beispielsweise im Bereich von 0,8 bis 3,0 mm, vorzugsweise im Bereich von 1,8 mm bis 3,0 mm, während die Dicke der metallischen Oberflächenbeschichtung 4 auf der jeweiligen Blechseite weniger als 100 µm, insbesondere weniger als 50 µm betragen kann.

Oberhalb der Stahlbleche 1, 2 ist ein Abschnitt eines Laserschweißkopfes 5 skizziert, der mit einer Optik zur Formung und Ausrichtung eines Laserstrahls 6, insbesondere einer Fokussierlinse 7 versehen ist. Der Laserstrahl 6 wird zum Beispiel mittels einer Nd:YAG-Laseranlage erzeugt, die eine Leistung im Bereich von 5 bis 6 kW liefert.

Dem Laserschweißkopf 5 ist eine Leitung 8 zur Zuführung von Schutzgas zugeordnet. Die Mündung der Schutzgasleitung 8 ist im Wesentlichen auf das mit dem Laserstrahl 6 erzeugte Schmelzbad 9 sowie die Schweißnaht 14 gerichtet. Mit 8.1 ist ein als Schutzgasquelle dienender Druckgastank bezeichnet. Als Schutzgas wird vorzugsweise reines Argon oder beispielsweise ein Gemisch aus Argon, Helium und/oder Kohlendioxid verwendet.

Zudem ist dem Laserschweißkopf 5 eine Führungsleitung 10 zugeordnet, mittels der dem Schmelzbad 9 Zusatzmaterial in Form eines Drahtes 11 zugeführt wird, wobei die Spitze des Zusatzdrahtes 11 im Schmelzbad 9 abschmilzt. Der Zusatzdraht 11 enthält im Wesentlichen kein Aluminium. Er kann beispielsweise folgende chemische Zusammensetzung aufweisen:
0,1 Gew.-% C,
0,8 Gew.-% Si,
1,8 Gew.-% Mn,
0,35 Gew.-% Cr,
0,6 Gew.-% Mo, und
2,25 Gew.-% Ni,
Rest Fe und unvermeidbare Verunreinigungen.

Das in Fig. 2 skizzierte Ausführungsbeispiel unterscheidet sich von dem in Fig. 1 gezeigten Beispiel dadurch, dass die Stahlbleche 1, 2' verschieden dick sind, so dass an dem Stumpfstoß ein Dickensprung d vorliegt. Beispielsweise besitzt das eine Stahlblech 2' eine Blechdicke im Bereich von 0,8 mm bis 1,2 mm, während das andere Stahlblech 1 eine Blechdicke im Bereich von 1,6 mm bis 3,0 mm aufweist. Darüber hinaus können sich die im Stumpfstoß miteinander zu verbindenden Stahlbleche 1, 2' auch in ihrer Werkstoffgüte voneinander unterscheiden. Beispielsweise ist die dickere Platine 1 aus höherfestem Stahl hergestellt, wohingegen die dünnere Stahlplatine 2' eine relativ weiche Tiefziehgüte besitzt. Die Stahlbleche 1, 2' werden ebenfalls mit einem Spalt 3 von wenigen Zehntelmillimetern aneinandergefügt.

Erfindungsgemäß umfasst die Laserstrahlschweißvorrichtung eine Beschichtungsvorrichtung 12, mittels welcher der Zusatzdraht 11 mit einem Graphitpartikel enthaltenden wachsförmigen oder flüssigen Gemisch beschichtet wird. Die in den Fig. 1 und 2 lediglich in Form eines Kastens angedeutete Beschichtungsvorrichtung 12 kann in verschiedenen Ausführungsformen verwirklicht sein. Sie ist vorzugsweise zwischen einer Drahtvorschubvorrichtung 13 und der den Zusatzdraht 11 dem Schmelzbad 9 zuführenden Führungsleitung 10 angeordnet (vgl. Figuren 3 bis 5).

In Fig. 3 ist ein Ausführungsbeispiel dargestellt, in welchem die Beschichtungsvorrichtung 12 eine Kammer 12.1 als Reservoir zur Aufnahme eines flüssigen Beschichtungsmittels aufweist. Die Kammer 12.1 enthält somit ein aus flüssigem Beschichtungsmittel gebildetes Tauchbad 15. Das Beschichtungsmittel wird der Kammer 12.1 über eine Einlassöffnung 12.2 zugeführt, die beispielsweise nahe dem Boden 12.3 der Kammer 12.1 in diese mündet. Das flüssige Beschichtungsmittel ist ein Gemisch aus einem flüssigen Trägermittel und Graphitpartikeln. Bei dem Trägermittel handelt es sich vorzugsweise um Öl, besonders bevorzugt Paraffinöl, beispielsweise sogenanntes Weißöl.

Die Kammer 12.1 weist einen Eingang 12.4 und einen Ausgang 12.5 zur Durchleitung eines zu beschichteten Zusatzdrahtes 11 auf. Dem Eingang 12.4 ist eine Drahtvorschubvorrichtung 13 vorgeordnet, die mindestens eine Antriebsrolle 13.1 und eine Gegenrolle 13.2 aufweist, die mit einer gewissen Andruckkraft an dem Zusatzdraht 11 anliegen.

Die Öffnungs- oder Querschnittsfläche des Ausgangs 12.5 ist um ein bestimmtes Maß größer als die Querschnittsfläche des unbeschichteten Zusatzdrahtes 11. Der Ausgang 12.5 und der Zusatzdraht 11 begrenzen somit einen Ringspalt 12.6, dessen radiale Spaltgröße in etwa der gewünschten Dicke einer auf den Zusatzdraht 11 aufzubringenden mantelförmigen Beschichtung 11.1 entspricht. Die Spaltgröße des Ringspaltes 12.6 wird entsprechend der aufzutragenden Beschichtungsmaterialmenge gewählt. Alternativ oder zusätzlich kann der Ausgang 12.5 der Kammer 12.1 mit einer variabel einstellbaren Ringblende versehen sein, mittels der die Spaltgröße des zwischen dem Zusatzdraht 11 und der Ausgangöffnung 12.5 vorhandenen Ringspaltes 12.6 variabel, vorzugsweise stufenlos einstellbar ist.

Der Eingang 12.4, durch den der zu beschichtende Zusatzdraht 11 in die Kammer 12.1 gelangt, ist so angeordnet und bemessen, dass der Zusatzdraht 11 möglichst konzentrisch zu der Innenwandung des Ausgangs 12.5 geführt wird. Der Eingang 12.4 kann hierzu durch eine Gleitführung 12.41 begrenzt sein.

Der Ausgang 12.5 der Kammer 12.1 kann beispielsweise durch eine Hülse 12.7 definiert sein, die vorzugsweise eine zylindrische Innenwandung aufweist und in das Innere der Kammer 12.1 ragt. Alternativ könnte die Hülse 12.7 auch an der Außenseite, z.B. an Unterseite der Kammer 12.1 vorstehen. An den Ausgang 12.5 schließt sich die den beschichteten Zusatzdraht 11 während des Schmelzschweißprozesses zum Schmelzbad führende Führungsleitung 10 an. Des Weiteren ist die Kammer 12.1 oberhalb des Tauchbadspiegels 15.1 vorzugsweise mit mindestens einer Entlüftungs- bzw. Druckausgleichsöffnung 12.8 versehen.

In Fig. 4 ist ein weiteres nicht erfindungsgemäßes Beispiel einer Beschichtungsvorrichtung 12 dargestellt, mittels der während des Schmelzschweißprozesses dem Schmelzbad 9 zuzuführender Zusatzdraht 11 beschichtet wird. In diesem Beispiel ist die Beschichtungsvorrichtung 12 als Rollenauftragssystem ausgeführt. Die Beschichtungsvorrichtung 12 weist mindestens einen wannenförmigen Behälter 12.9 zur Aufnahme von flüssigem Beschichtungsmittel 15' auf. Das Beschichtungsmittel ist 15' wiederum ein Gemisch aus einem flüssigen Trägermittel und Graphitpartikeln. Bei dem Trägermittel kann es sich insbesondere um Paraffinöl, beispielsweise Weißöl handeln.

Dem wannenförmigen Behälter 12.9 ist mindestens eine teilweise in das Beschichtungsmittel 15' getauchte Aufnahmerolle 12.10 zugeordnet, die aus dem Behälter 12.9 aufgenommenes Beschichtungsmittel 15' auf eine Auftragsrolle 12.11 überträgt.

Die Auftragsrolle 12.11 ist vorzugsweise mit einer Ringnut (nicht gezeigt) versehen, deren Querschnittsprofil um ein bestimmtes Maß größer ist als das Querschnittsprofil des zu beschichtenden Zusatzdrahtes 11, wobei der Zusatzdraht 11 so geführt wird, dass er zumindest teilweise in die Ringnut der Auftragsrolle 12.11 eingreift. Die Aufnahmerolle 12.10 kann dabei einen umlaufenden Vorsprung (nicht gezeigt) aufweisen, der ebenfalls in die Ringnut eingreift.

Durch die Steuerung der Drehgeschwindigkeit der mindestens einen Auftragsrolle 12.11 und/oder der mindestens einen in das Beschichtungsmittel getauchten Aufnahmerolle 12.10 in Relation zu der Vorschubgeschwindigkeit des Zusatzdrahtes 11 kann bzw. wird die Menge des aufzutragenden Beschichtungsmaterials eingestellt.

Der mittels der mindestens einen Auftragsrolle 12.11 oder mehrerer solcher Auftragsrollen 12.11 beschichtete Zusatzdraht 11 wird dann durch die Führungsleitung 10 dem mittels des Laserstrahls 6 erzeugten Schmelzbad 9 zugeführt. Die der Beschichtungsvorrichtung 12 gemäß Fig. 4 vorgeordnete Drahtvorschubvorrichtung 13 weist wiederum mindestens eine Antriebsrolle 13.1 und eine Gegenrolle 13.2 auf, die an dem Zusatzdraht 11 mit Reibschluss anliegen.

In Fig. 5 ist ein weiteres Ausführungsbeispiel einer Beschichtungsvorrichtung 12 dargestellt, mittels der während des Schmelzschweißprozesses dem Schmelzbad 9 zuzuführender Zusatzdraht 11 beschichtet wird. Die Beschichtungsvorrichtung 12 umfasst in diesem Fall ein Tauchbad 15, in welchem mindestens eine Umlenkrolle 12.12 getaucht angeordnet ist, so dass der mittels einer dem Tauchbad 15 vorgeordneten Drahtvorschubvorrichtung 13 in Richtung der Führungsleitung 10 geförderte Zusatzdraht 11 durch das Tauchbad 15 hindurchgeleitet wird. Mit 12.13 sind weitere optionale Umlenkrollen bezeichnet, die außerhalb des Tauchbades 15 angeordnet sind. Die Umlenkrollen 12.12, 12.13 sind vorzugsweise mit einer Ringnut (nicht gezeigt) versehen, deren Querschnittsprofil (Breite) um ein bestimmtes Maß größer ist als das Querschnittsprofil (Durchmesser) des zu beschichtenden Zusatzdrahtes 11.

Zwischen der im Tauchbad 15 angeordneten Umlenkrolle 12.2 und der Führungsleitung 10 kann eine Abstreif- oder Schichtdickeneinstellvorrichtung 16 angeordnet sein, mittels der die Dicke bzw. Menge des aufzutragenden Beschichtungsmaterials eingestellt werden kann. Die Abstreif- oder Schichtdickeneinstellvorrichtung 16 kann beispielsweise aus mindestens einer ringförmigen Abstreifblende und/oder einer auf den beschichteten Zusatzdraht 11 gerichteten Inertgas- oder Druckluftdüse (nicht gezeigt) gebildet sein. Die Spaltgröße des Ringspaltes zwischen Abstreifblende und Zusatzdraht 11 wird entsprechend der aufzutragenden Beschichtungsmaterialmenge gewählt. Vorzugsweise ist die Abstreifblende 16 variabel einstellbar, so die Spaltgröße des zwischen dem Zusatzdraht und der Abstreifblende vorhandenen Ringspaltes 12.6 variabel, vorzugsweise stufenlos einstellbar ist. Überschüssiges Beschichtungsmaterial (Beschichtungsmittel) fällt von dem Zusatzdraht 11 an der Abstreif- oder Schichtdickeneinstellvorrichtung 16 zurück in das Tauchbadgefäß 15.2.

Alternativ kann die Eingangsöffnung der Führungsleitung 10 auch im Tauchbad 15 angeordnet sein, so dass das in das Tauchbad 15 eingetauchte Ende der Führungsleitung 10 die Funktion einer Schichtdickeneinstellvorrichtung übernimmt.

Die Ausführung der Erfindung ist nicht auf die in der Zeichnung skizzierten Ausführungsbeispiele beschränkt. Vielmehr sind zahlreiche Varianten denkbar, die auch bei einer von den skizzierten Beispielen abweichenden Gestaltung von der Erfindung, wie sie in den beigefügten Ansprüchen angegeben ist, Gebrauch machen. Insbesondere liegt es im Rahmen der Erfindung, einzelne oder mehrere der Merkmale der anhand der Figuren 1 bis 5 erläuterten Ausführungsbeispiele miteinander zu kombinieren.

### Bezugszeichenliste

- 1: Stahlblech (Werkstück)
- 2: Stahlblech (Werkstück)
- 2': Stahlblech (Werkstück)
- 3: Spalt (Fügespalt)
- 4: metallische Beschichtung, z.B. aus Al, Al-Si oder Zn
- 5: Laserschweißkopf
- 6: Laserstrahl
- 7: Fokussierlinse
- 8: Zufuhrleitung für Schutzgas
- 8.1: Schutzgasquelle
- 9: Schmelzbad
- 10: Führungsleitung (Zusatzdrahtzuführeinrichtung)
- 11: Zusatzdraht
- 11.1: Beschichtung von 11
- 12: Beschichtungsvorrichtung
- 12.1: Kammer
- 12.2: Einlassöffnung
- 12.3: Boden
- 12.4: Eingang
- 12.41: Gleitführung
- 12.5: Ausgang
- 12.6: Ringspalt
- 12.7: Hülse
- 12.8: Entlüftungs- bzw. Druckausgleichsöffnung
- 12.9: wannenförmiger Behälter
- 12.10: Aufnahmerolle
- 12.11: Auftragsrolle
- 12.12: Umlenkrolle
- 12.13: Umlenkrolle
- 13: Drahtvorschubvorrichtung
- 13.1: Antriebsrolle
- 13.2: Gegenrolle
- 14: Schweißnaht
- 15: Tauchbad (Beschichtungsmittel)
- 15': Beschichtungsmittel
- 15.1: Tauchbadspiegel
- 15.2: Tauchbadgefäß (wannenförmiger Behälter)
- 16: Abstreif- oder Schichtdickeneinstellvorrichtung
- d: Dickensprung

## Patentansprüche

1. Verfahren zum Schmelzschweißen eines oder mehrerer Stahlbleche (1, 2; 2') aus presshärtbarem Stahl, vorzugsweise Mangan-Bor-Stahl, bei dem das Schmelzschweißen unter Zuführung von Zusatzdraht (11) in das ausschließlich mittels eines Laserstrahls (6) erzeugte Schmelzbad (9) erfolgt,
**dadurch gekennzeichnet, dass** der Zusatzdraht (11) vor dem Schmelzschweißen mit Graphitpartikeln beschichtet wird und der so beschichtete Zusatzdraht (11) direkt in das Schmelzbad (9) derart eingeführt wird, dass die Spitze des Zusatzdrahtes (11) im Schmelzbad (9) schmilzt, wobei die Graphitpartikel zum Aufbringen auf den Zusatzdraht (11) mit einem wachsförmigen oder flüssigen Trägermittel gemischt werden und das Gemisch als Beschichtung (11.1) auf den Zusatzdraht (11) aufgebracht wird.

2. Verfahren nach Anspruch 1, **dadurch gekennzeichnet, dass** das Beschichten des Zusatzdrahtes (11) mit Graphitpartikeln am Ort des Schmelzschweißens, vorzugsweise kontinuierlich während des Vorgangs des Schmelzschweißens durchgeführt wird.

3. Verfahren nach Anspruch 1 oder 2, **dadurch gekennzeichnet, dass** das Beschichten des Zusatzdrahtes (11) mit Graphitpartikeln zwischen einer Drahtvorschubvorrichtung (13) und einer den Zusatzdraht (11) dem Schmelzbad (9) zuführenden Führungsleitung (10) durchgeführt wird.

4. Verfahren nach einem der Ansprüche 1 bis 3, **dadurch gekennzeichnet, dass** das Beschichten des Zusatzdrahtes (11) mit Graphitpartikeln mittels einer Beschichtungsvorrichtung (12) in Form eines Tauchbades (15), einer Rollenauftragsvorrichtung (12.10, 12.11) oder einer Aufsprühvorrichtung durchgeführt wird.

5. Verfahren nach einem der Ansprüche 1 bis 4, **dadurch gekennzeichnet, dass** als flüssiges Trägermittel Öl, vorzugsweise Paraffinöl verwendet wird.

6. Verfahren nach einem der Ansprüche 1 bis 5, **dadurch gekennzeichnet, dass** das oder die Stahlbleche (1, 2; 2') eine Oberflächenbeschichtung (4) auf Aluminium- oder Aluminium-Silizium-Basis aufweisen, die sich bis zu mindestens einer zu verschweißenden Längskante des Stahlblechs oder der Stahlbleche (1, 2; 2') erstreckt.

7. Verfahren nach einem der Ansprüche 1 bis 6, **dadurch gekennzeichnet, dass** das oder die Stahlbleche (1, 2; 2') eine Dicke von mindestens 1,8 mm oder mindestens 2,0 mm aufweisen.

8. Verfahren nach einem der Ansprüche 1 bis 7, **dadurch gekennzeichnet, dass** das oder die Stahlbleche (1, 2; 2') im Stumpfstoß verschweißt werden, wobei sich an dem Stumpfstoß ein Dickensprung (d) von mindestens 0,4 mm ergibt.

9. Verfahren nach einem der Ansprüche 1 bis 8, **dadurch gekennzeichnet, dass** der Anteil an Graphitpartikeln in dem Gemisch aus Trägermittel und Graphitpartikeln so eingestellt wird, dass der Zusatzdraht (11), nachdem das Gemisch als Beschichtung (11.1) auf ihn aufgebracht wurde, einen Kohlenstoff-Massenanteil von mindestens 0,2 Gew.-%, vorzugsweise von mindestens 0,3 Gew.-% aufweist.

10. Verfahren nach einem der Ansprüche 1 bis 9, **dadurch gekennzeichnet, dass** der Anteil an Graphitpartikeln in dem Gemisch aus Trägermittel und Graphitpartikeln so eingestellt wird, dass der Zusatzdraht (11), nachdem das Gemisch als Beschichtung (11.1) auf ihn aufgebracht wurde, einen Kohlenstoff-Massenanteil aufweist, der um 0,1 Gew.-% bis 1,2 Gew.% höher liegt als der Kohlenstoff-Massenanteil des Grundwerkstoffs des oder der Stahlbleche (1, 2; 2').

11. Verfahren nach einem der Ansprüche 1 bis 10, **dadurch gekennzeichnet, dass** der unbeschichtete Zusatzdraht (11) mindestens ein Legierungselement enthält, welches die Bildung von Austenit in dem mit dem Laserstrahl (6) erzeugten Schmelzbad (9) begünstigt.

12. Verfahren nach einem der Ansprüche 1 bis 11, **dadurch gekennzeichnet, dass** das Schmelzbad (9) während des Schmelzschweißens mit Schutzgas beaufschlagt wird.

13. Vorrichtung zum Schmelzschweißen eines oder mehrerer Stahlbleche (1, 2; 2'), insbesondere zur Durchführung eines Verfahrens gemäß einem der Ansprüche 1 bis 12, mit einem Laserschweißkopf (5) und einer Führungsleitung (10) zum Zuführen von Zusatzdraht (11) in das ausschließlich mittels eines Laserstrahls (6) erzeugte Schmelzbad (9), **gekennzeichnet durch** eine in Form eines Tauchbades ausgeführte Beschichtungsvorrichtung (12), mittels welcher der Zusatzdraht (11) mit einem Graphitpartikel enthaltenden wachsförmigen oder flüssigen Gemisch beschichtet wird.

14. Vorrichtung zum Schmelzschweißen nach Anspruch 13, **dadurch gekennzeichnet, dass** die Beschichtungsvorrichtung (12) zwischen einer Drahtvorschubvorrichtung (13) und einer den Zusatzdraht (11) dem Schmelzbad (9) zuführenden Führungsleitung (10) angeordnet ist.

## Claims

1. Method of fusion welding one or a plurality of steel sheets (1, 2; 2') made of press-hardenable steel, preferably manganese-boron steel, in which method the fusion welding takes place supplying filler wire (11) into the molten bath (9) generated exclusively by means of a laser beam (6), **characterised in that** the filler wire (11) is coated with graphite particles prior to fusion welding and the filler wire (11) coated in this manner is introduced directly into the molten bath (9) such that the tip of the filler wire (11) melts in the molten bath (9), wherein the graphite particles are mixed with a waxy or liquid carrier medium to be applied on the filler wire (11) and the mixture is applied as a coating (11.1) on the filler wire (11).

2. Method according to claim 1, **characterised in that** the filler wire (11) is coated with graphite particles at the location of the fusion welding, preferably continuously during the fusion welding operation.

3. Method according to claim 1 or 2, **characterised in that** the filler wire (11) is coated with graphite particles between a wire feed device (13) and a guide line (10) supplying the filler wire (11) to the molten bath (9).

4. Method according to any one of claims 1 to 3, **characterised in that** the filler wire (11) is coated with graphite particles by means of a coating device (12) in the form of a dipping bath (15), a roller application device (12.10, 12.11) or a spraying device.

5. Method according to any one of claims 1 to 4, **characterised in that** oil, preferably paraffin oil, is used as the liquid carrier medium.

6. Method according to any one of claims 1 to 5, **characterised in that** the steel sheet(s) (1, 2; 2') have an aluminium or aluminium-silicone-based surface coating (4) which extends to at least one longitudinal edge, to be welded, of the steel sheet(s) (1, 2; 2').

7. Method according to any one of claims 1 to 6, **characterised in that** the steel sheet(s) (1, 2; 2') have a thickness of at least 1.8 mm or at least 2.0 mm.

8. Method according to any one of claims 1 to 7, **characterised in that** the steel sheet(s) (1, 2; 2') are welded in the butt joint, wherein a thickness jump (d) of at least 0.4 mm results at the butt joint.

9. Method according to any one of claims 1 to 8, **characterised in that** the proportion of graphite particles in the mixture of carrier medium and graphite particles is set such that the filler wire (11), after the mixture has been applied on the filler wire as the coating (11.1), has a carbon mass proportion of at least 0.2% by weight, preferably of at least 0.3% by weight.

10. Method according to any one of claims 1 to 9, **characterised in that** the proportion of graphite particles in the mixture of carrier medium and graphite particles is set such that the filler wire (11), after the mixture has been applied on the filler wire as the coating (11.1), has a carbon mass proportion which is higher by 0.1% by weight to 1.2% by weight than the carbon mass proportion of the base material of the steel sheet(s) (1, 2; 2').

11. Method according to any one of claims 1 to 10, **characterised in that** the uncoated filler wire (11) contains at least one alloy element which favours the formation of austenite in the molten bath (9) generated with the laser beam (6).

12. Method according to any one of claims 1 to 11, **characterised in that** inert gas is applied to the molten bath (9) during the fusion welding.

13. Device for fusion welding one or a plurality of steel sheets (1, 2; 2'), in particular to carry out a method according to any one of claims 1 to 12, with a laser welding head (5) and a guide line (10) to supply filler wire (11) into the molten bath (9) generated exclusively by means of a laser beam (6), **characterised by** a coating device (12) in the form of a dipping bath by means of which the filler wire (11) is coated with a waxy or liquid mixture containing graphite particles.

14. Device for fusion welding according to claim 13, **characterised in that** the coating device (12) is arranged between a wire feed device (13) and a guide line (10) supplying the filler wire (11) to the molten bath (9).

## Revendications

1. Procédé de soudage par fusion d'une ou plusieurs tôles d'acier (1, 2; 2') en acier trempable sur presse, de préférence en acier au manganèse-bore, dans lequel le soudage par fusion est effectué avec l'apport d'un fil d'apport (11) dans le bain de fusion (9) généré exclusivement au moyen d'un rayon laser (6), **caractérisé en ce que** le fil d'apport (11) est revêtu de particules de graphite avant le soudage par fusion et **en ce que** et le fil d'apport (11) ainsi revêtu est introduit directement dans le bain de fusion (9) de sorte à ce que la pointe du fil d'apport (11) fond dans le bain de fusion (9), les particules de graphite à appliquer sur le fil d'apport (11) étant mélangées avec un véhicule cireux ou liquide et le mélange étant appliqué en tant que revêtement (11.1) sur le fil d'apport (11).

2. Procédé selon la revendication 1, **caractérisé en ce que** le revêtement du fil d'apport (11) est réalisé avec des particules de graphite sur le lieu de soudage par fusion, de préférence en continu pendant le processus de soudage par fusion.

3. Procédé selon la revendication 1 ou 2, **caractérisé en ce que** le revêtement du fil d'apport (11) est réalisé avec des particules de graphite entre un dispositif d'avancement de fil (13) et une conduite de guidage (10) acheminant le fil d'apport (11) dans le bain de fusion (9).

4. Procédé selon l'une des revendications 1 à 3, **caractérisé en ce que** le revêtement du fil d'apport (11) est réalisé avec des particules de graphite à l'aide d'un dispositif de revêtement (12) sous forme d'un bain d'immersion (15), d'un dispositif d'application au rouleau (12.10, 12.11) ou d'un dispositif de pulvérisation.

5. Procédé selon l'une des revendications 1 à 4, **caractérisé en ce que** de l'huile, de préférence de l'huile de paraffine, est utilisée comme véhicule liquide.

6. Procédé selon l'une des revendications 1 à 5, **caractérisé en ce que** la ou les tôles d'acier (1, 2; 2') présentent un revêtement de surface (4) à base d'aluminium ou de silicium d'aluminium qui s'étend jusqu'à au moins un bord longitudinal à souder de la tôle d'acier ou des tôles d'acier (1, 2; 2').

7. Procédé selon l'une des revendications 1 à 6, **caractérisé en ce que** la ou les tôles d'acier (1, 2; 2') présentent une épaisseur d'au moins 1,8 mm ou d'au moins 2,0 mm.

8. Procédé selon l'une des revendications 1 à 7, **caractérisé en ce que** la ou les tôles d'acier (1, 2; 2') sont soudées bout à bout, ce qui donne un saut d'épaisseur (d) d'au moins 0,4 mm au niveau de l'aboutage.

9. Procédé selon l'une des revendications 1 à 8, **caractérisé en ce que** la proportion de particules de graphite dans le mélange composé par le véhicule et les particules de graphite est réglée de telle sorte que le fil d'apport (11), une fois que le mélange a été appliqué sur celui-ci en tant que revêtement (11.1), présente une teneur massique en carbone d'au moins 0,2 % en poids, de préférence d'au moins 0,3 % en poids.

10. Procédé selon l'une des revendications 1 à 9, **caractérisé en ce que** la proportion de particules de graphite dans le mélange composé par le véhicule et les particules de graphite est réglée de telle sorte que le fil d'apport (11), une fois que le mélange a été appliqué sur celui-ci en tant que revêtement (11.1), présente une teneur massique en carbone supérieure de 0,1 % en poids à 1,2 % en poids par rapport à la teneur massique en carbone du matériau de base du ou des tôles d'acier (1, 2; 2').

11. Procédé selon l'une des revendications 1 à 10, **caractérisé en ce que** le fil d'apport non revêtu (11) contient au moins un élément d'alliage qui favorise la formation d'austénite dans le bain de fusion (9) généré par le rayon laser (6).

12. Procédé selon l'une des revendications 1 à 11, **caractérisé en ce que** le bain de fusion (9) est alimenté en gaz de protection pendant le soudage par fusion.

13. Dispositif de soudage par fusion d'une ou plusieurs tôles d'acier (1, 2; 2'), en particulier pour effectuer un procédé selon l'une des revendications 1 à 12, avec une tête de soudage au laser (5) et un conduit de guidage (10) acheminant le fil d'apport (11) dans le bain de fusion (9) généré exclusivement par un rayon laser (6), **caractérisé par** un dispositif de revêtement (12) réalisé sous forme de bain d'immersion, à l'aide duquel le fil d'apport (11) est revêtu d'un mélange cireux ou liquide contenant des particules de graphite.

14. Dispositif de soudage par fusion selon la revendication 13, **caractérisé en ce que** le dispositif de revêtement (12) est agencé entre un dispositif d'avancement de fil (13) et un conduit de guidage (10) acheminant le fil d'apport (11) vers le bain de fusion (9).
